# EUROPEAN PATENT APPLICATION

(11) **EP 2 933 735 A1**
(43) Date of publication of application: **21.10.2015**
(21) Application number: 14198686.9
(22) Date of filing: 17.12.2014
(51) Int. Cl.: G06F 17/30

(54) **Searching method and search engine**

(30) Priority: 14.04.2014 CN 201410148917
(71) Applicant: Baidu Online Network Technology (Beijing) Co., Ltd, Beijing 100085 (CN)
(72) Inventor: Wang, Haifeng, Beijing 100085 (CN); Huang, Jizhou, Beijing 100085 (CN); Li, Ying, Beijing 100085 (CN); Wu, Hua, Beijing 100085 (CN)
(74) Representative: m patent group

(57) **Abstract**

The present disclosure provides a searching method and a search engine (100). The searching method includes the following steps: obtaining by a search engine (100) a search query; determining by the search engine (100) a first search result and at least one first level of demand dimensions corresponding to the search query according to the search query, and providing by the search engine the first search result and the at least one first level of demand dimensions in a search result page; obtaining by the search engine an operation on the at least one first level of demand dimensions from a user, and updating by the search engine the first search result and the at least one first level of demand dimensions in the search result page according to a demand dimension corresponding to the operation of the user. In order to perform this searching method, the search engine (100) comprises a first obtaining module (110), a determining module (120), a providing module (130), a second obtaining module (140), and an updating module (150).

## Description

### FIELD

Embodiments of the present disclosure generally relate to a search technology, and more particularly, to a searching method and a search engine.

### BACKGROUND

Currently, a user usually obtains internet information by using a search engine. Specifically, firstly, the user inputs a search query, and then the search engine matches search results corresponding to the search query in web pages or web services according to the search query input by the user, and provides the search results to the user after sequencing the search results, finally, the user obtains internet information according to the search results provided by the search engine.

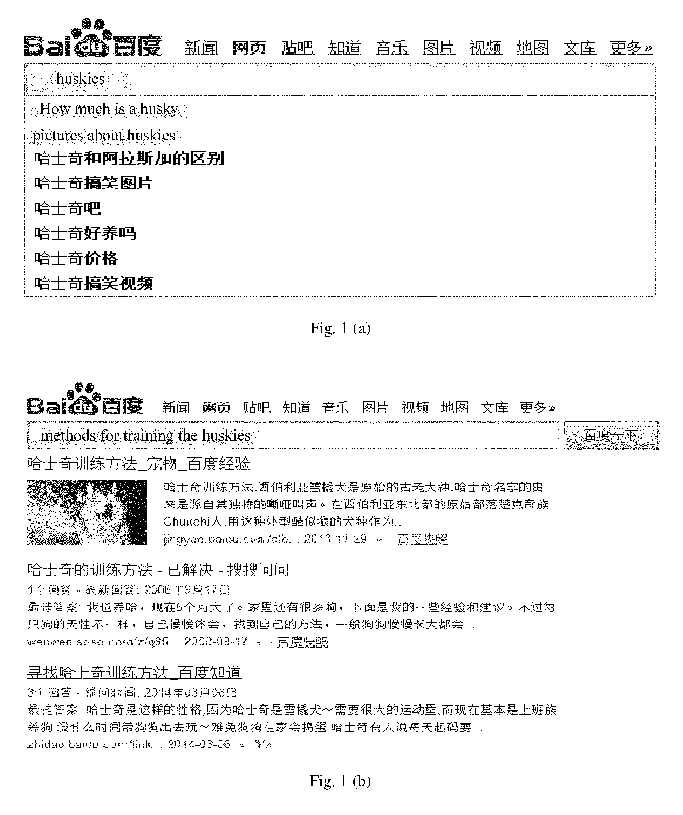

There are some problems in the above-described searching mechanism based on a search query matching, which are as follows: (1) The user may not know how to build the search query, and thus the search result meeting a demand of the user cannot be obtained. (2) If the search results do not meet the demand of the user, the user needs to vary the search query to perform a search again. For example, referring to Fig. 1(a) which is a schematic diagram of recommendations provided by a search engine according to a related art, the user can select a recommendation from the recommendations provided by the search engine to perform a search again. Since the recommendations are expanded based on the search query input by the user, only hot search queries can be provided for the user and there is still a possibility that the hot search queries cannot meet the demand of the user. (3) If the user focuses on an attribute or associated information of a thing (such as an entity, a resource, etc.) which is difficult to describe, the user usually inputs a broad search query without the attribute or associated information to perform a search, which can may lead to a result that the search results are not precise enough, thus increasing a search cost of the user.

In summary, it shows that the user is not satisfied with the current search result corresponding to the search query and wants to get a better search result, when the user modifies the search query, clicks on the related search queries, or uses the recommendations. However, if the user cannot obtain a satisfactory search result provided by the search engine by modifying the search query, clicking on the related search queries, or using the recommendations, a satisfaction of the user may be decreased, or the user may abandon the search engine if the user tries several times without obtaining any useful search result, which is an injury to the user.

In addition, with the above-described searching mechanism based on a search query matching, the search results provided by the search engine often cannot satisfy the demand of the user. Referring to Fig. 1(b), Fig. 1(b) is a schematic diagram of providing the search result by the search engine according to a related art. As shown in Fig. 1 (b), the user inputs the search query "methods for training the huskies", at this time, the user wishes to obtain a complete set of methods for training the huskies, however, the search results apparently cannot meet the demand of the user.

### SUMMARY

Embodiments of the present disclosure seek to solve at least one of the problems existing in the related art to at least some extent.

Accordingly, a first objective of the present disclosure is to provide a searching method.

A second objective of the present disclosure is to provide a search engine.

In order to achieve above objectives, according to embodiments of a first aspect of the present disclosure, a searching method is provided, including: obtaining by a search engine a search query; determining by the search engine a first search result and at least one first level of demand dimensions corresponding to the search query according to the search query, and providing by the search engine the first search result and the at least one first level of demand dimensions in a search result page; obtaining by the search engine an operation on the at least one first level of demand dimensions from a user, and updating by the search engine the first search result and the at least one first level of demand dimensions in the search result page according to a demand dimension corresponding to the operation of the user.

With the searching method according to an embodiment of the present disclosure, by determining by the search engine the first search result and the at least one first level of demand dimensions corresponding to the search query according to the search query, on the one hand, the user can locate the search query corresponding to his/her demand and the corresponding search result quickly according to the at least one first level of demand dimensions, and a defect of the related art that the user does not know how to construct the search query to obtain the search result meeting the demand of the user may be overcome, such that even if the user does not know how to construct the search query, he search result meeting the demand of the user can be gradually defined according to a plurality of levels of demand dimensions; on the other hand, the user can obtain the corresponding search results by clicking on different demand dimensions in the search result page, that is, the search results can be obtained automatically by an intelligent interaction without performing a search again, and a search cost of the user can be reduced. In addition, the demand dimension may be multi-azimuth correlation information associated with a semantic meaning of the search query closely and meeting the demand of the user, for example, the plurality of levels demand dimensions can represent lateral correlation information of the search query by a plurality of first level demand dimensions, also can represent longitudinal correlation information of the search query by a plurality of lower level demand dimensions, such that the information (may comprise a solution, a value information and an action button) can be provided to the user in many aspects, thus the user can obtain the search result meeting the demand of the user.

In order to achieve the above objectives, according to embodiments of a second aspect of the present disclosure, the search engine is provided, including: a first obtaining module, configured to obtain a search query; a determining module, configured to determine a first search result and at least one first level of demand dimensions corresponding to the search query according to the search query; a providing module, configured to provide the first search result and the at least one first level of demand dimensions in a search result page; a second obtaining module, configured to obtain an operation on the at least one first level of demand dimensions from a user; an updating module, configured to update the first search result and the at least one first level of demand dimensions in the search result page according to a demand dimension corresponding to the operation of the user.

With the search engine according to an embodiment of the present disclosure, by determining by the search engine the first search result and the at least one first level of demand dimensions corresponding to the search query according to the search query, on the one hand, the user can locate the search query corresponding to his/her demand and the corresponding search result quickly according to the at least one first level of demand dimensions, and a defect of the related art that the user does not know how to construct the search query to obtain the search result meeting the demand of the user may be overcome, such that even if the user does not know how to construct the search query, the search result meeting the demand of the user can be gradually defined according to a plurality of levels of demand dimensions; on the other hand, the user can obtain the corresponding search results by clicking on different demand dimensions in the search result page, that is, the search results can be obtained automatically by an intelligent interaction without performing a search again, and a search cost of the user can be reduced. In addition, the demand dimension may be multi-azimuth correlation information associated with a semantic meaning of the search query closely and meeting the demand of the user, for example, the plurality of levels demand dimensions can represent lateral correlation information of the search query by a plurality of first level demand dimensions, also can represent longitudinal correlation information of the search query by a plurality of lower level demand dimensions, such that the information (may comprise a solution, a value information and an action button) can be provided to the user in many aspects, thus the user can obtain the search result meeting the demand of the user.

Embodiments of a third aspect of the present disclosure provide a non-transitory computer-readable storage medium, including one or more programs for executing a searching method provided by embodiments of the present disclosure.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1(a) is a schematic diagram of recommendations provided by a search engine according to a related art;
Fig. 1(b) is a schematic diagram of search results provided by the search engine according to a related art;
Fig. 2 is a flow chart of a searching method according to an embodiment of the present disclosure;
Fig. 3(a) is schematic diagram of a search result page according to an embodiment of the present disclosure;
Fig. 3(b) is schematic diagram of a search result page according to another embodiment of the present disclosure;
Fig. 3(c) is schematic diagram of a search result page according to yet another embodiment of the present disclosure;
Fig. 4 is a flow chart of a searching method according to another embodiment of the present disclosure;
Fig. 5 is a block diagram of a search engine according to an embodiment of the present disclosure;
Fig. 6 is a block diagram of an updating module according to an embodiment of the present disclosure;
Fig. 7 is a block diagram of a search engine according to another embodiment of the present disclosure; and
Fig. 8 is a block diagram of a search engine according to yet another embodiment of the present disclosure.

### DETAILED DESCRIPTION

Reference will be made in detail to embodiments of the present disclosure. Embodiments of the present disclosure will be shown in drawings, in which the same or similar elements and the elements having same or similar functions are denoted by like reference numerals throughout the descriptions. The embodiments described herein according to drawings are explanatory and illustrative, not construed to limit the present disclosure.

In addition, terms such as "first" and "second" are used herein for purposes of description and are not intended to indicate or imply relative importance or significance. Thus, the feature defined with "first" and "second" may comprise one or more this feature. In the description of the present disclosure, the term "a plurality of" means two or more than two, unless specified otherwise.

In order to solve the problems in the searching mechanism based on a search query matching, a searching method and a search engine are provided according to an embodiment of the present disclosure. In the following, the searching method and the search engine according to embodiments of the present disclosure will be described in detail with reference to drawings.

The searching method, includes: a search query is obtained by a search engine; a first search result and at least one first level of demand dimensions corresponding to the search query are determined by the search engine according to the search query, and the first search result and the at least one first level of demand dimensions are provided in a search result page by the search engine; an operation on the at least one first level of demand dimensions from a user is obtained by the search engine, and the first search result and the at least one first level of demand dimensions in the search result page are updated by the search engine according to a demand dimension corresponding to the operation of the user.

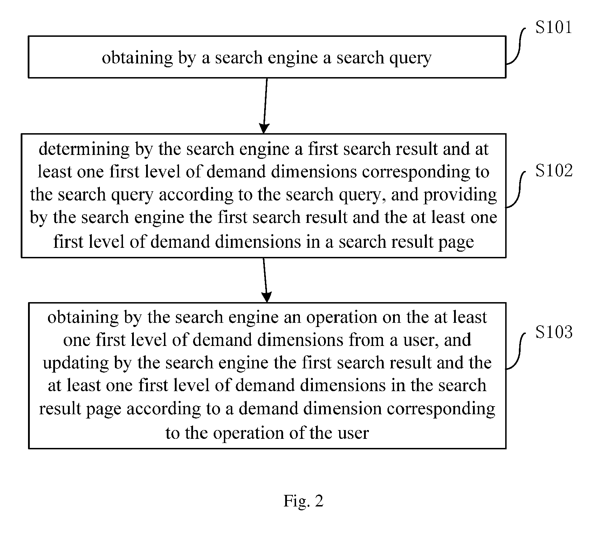

Fig. 2 is a flow chart of a searching method according to an embodiment of the present disclosure.

As shown in Fig. 2, the searching method includes the following steps.

In step S201, a search query is obtained by a search engine.

Specifically, in some embodiments, the user can input the search query in an input box provided by the search engine to enable the search engine to obtain the search query, also the user can input the search query in many kinds of input boxes for quick searching to enable the search engine to obtain the search query, and this is not limited in embodiments of the present method.

In step S202, a first search result and at least one first level of demand dimensions corresponding to the search query are determined by the search engine according to the search query, and the first search result and the at least one first level of demand dimensions are provided in a search result page by the search engine.

Specifically, determining by the search engine the first search result can refer to the related art, which is not limited in embodiments of the present disclosure. The demand dimensions corresponding to the search query are multi-azimuth information obtained by mining a knowledge base according to a demand intensity and associated with a semantic meaning of the search query, and may represent correlation information corresponding to different requirements for the search query. The demand dimensions may represent lateral correlation information associated with the semantic meaning of the search query, also may represent longitudinal correlation information associated with the semantic meaning of the search query.

In some embodiments, the search engine includes a plurality of levels of demand dimensions, in which each first level of demand dimensions includes a plurality of first level demand dimensions, and each first level demand dimension corresponds to at least one lower level demand dimension. The plurality of first level demand dimensions can represent the lateral correlation information, and the plurality of levels of demand dimensions can represent the longitudinal correlation information, such that various demands of the user can be covered fully in many aspects, and thus the user can obtain the search result meeting the demand of the user.

For example, the first level of demand dimensions corresponding to the search query "huskies" may be "purchase strategy", "adorable Husky", "methods for feeding", "anecdotes". Each first level demand dimension may correspond to at least one second level demand dimension, such as the first level demand dimension "purchase strategy" may correspond to the second level demand dimensions such as "How much is a husky ", "Is it easy to keep it ? ", "how to distinguish a purebred dog" and "more purchase strategies".

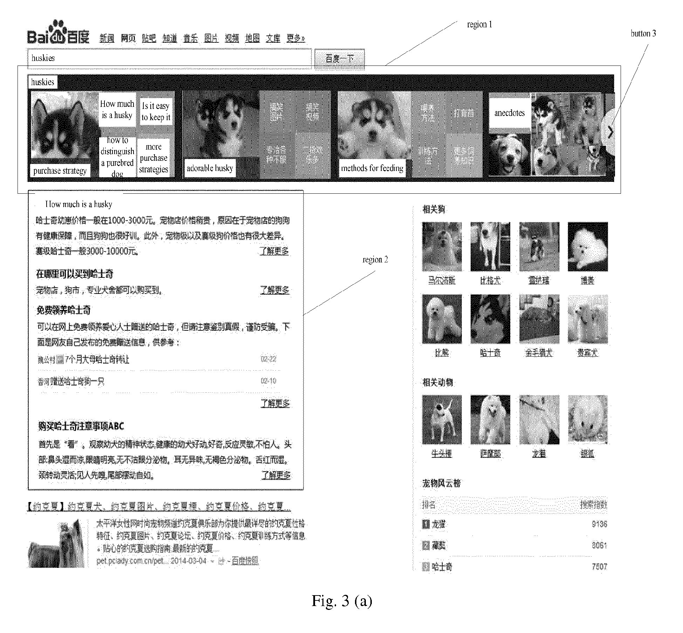

Fig. 3(a) is a schematic diagram of a search result page according to an embodiment of the present disclosure, as shown in Fig. 3(a), with respect to the search query "huskies" input by the user, the search result page may provide a plurality of demand dimensions at a same level (i.e. the first level demand dimensions) (such as "purchase strategy", "adorable Husky", " methods for feeding" and "anecdotes") in region 1; the plurality of lower level demand dimensions(i.e. the second level demand dimensions) corresponding to each first level demand dimension are provided in the region where the each first level demand dimension is located, for example, the demand dimensions (such as "How much is a husky", "Is it easy to keep it ? ", "how to distinguish a purebred dog" and "more purchase strategies") can be provided with respect to "purchase strategy". According to a preset strategy, the search results corresponding to one demand dimension thereof can be displayed in region 2, and the preset strategy is not limited in the present disclosure. For example, the search results corresponding to the demand dimension "How much is a husky" may be displayed in Fig. 3(a).

In some embodiments, the user can click on button 3 in region 1 to view more demand dimensions.

In step S203, an operation on the at least one first level of demand dimensions from the user is obtained by the search engine, the first search result and the at least one first level of demand dimensions in the search result page are updated by the search engine according to a demand dimension corresponding to the operation of the user.

Specifically, after the search engine provides the first search result and the at least one first level of demand dimensions, the user can perform an appropriate operation according to his/her demand. The search engine may determine the first search result and the at least one first level of demand dimensions according to the operation of the user, and may update the search result page accordingly.

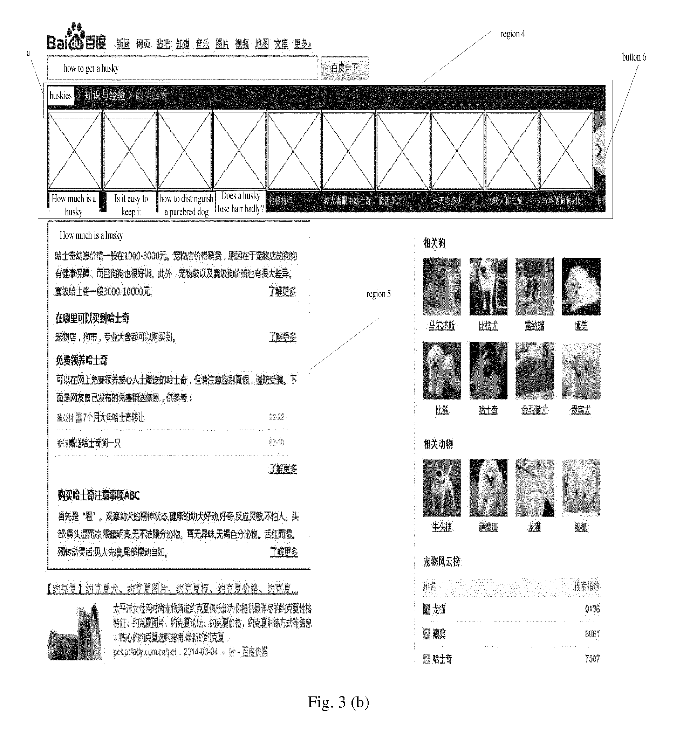

Fig. 3(b) is a schematic diagram of a search result page according to another embodiment of the present disclosure, after the user click on the demand dimension "purchase strategy", as shown in Fig. 3(b), the updated search result page provides the lower level demand dimensions corresponding to the demand dimension "purchase strategy" (such as "How much is a husky", "Is it easy to keep it? ", "Does a husky lose hair badly? ") in region 4,and provides the search result corresponding to the demand dimension "purchase strategy" in region 5. The user can click on button 6 on the right side of region 4 to view more lower level demand dimensions corresponding to the demand dimension "purchase strategy".

In addition, if the user clicks on the demand dimension "purchase strategy", the search query may be automatically transformed to "how to get a husky" without inputting the search query again, thus the operations of the user can be reduced.

In some embodiments, some higher levels of demand dimensions corresponding to the current demand dimension can be provided in the search result page by the engine, for example, as shown in part a of region 4 in Fig. 3(b), the user may click on the corresponding demand dimension to update the search result in the search result page.

It should be understood that, the above-described examples are merely illustrative, those having the ordinary skills in the related art can make changes, alternatives, and modifications in the embodiments without departing from spirit, principles and scope of the present disclosure.

With the searching method according to an embodiment of the present disclosure, by determining by the search engine the first search result and the at least one first level of demand dimensions corresponding to the search query according to the search query, on the one hand, he user can locate the search query corresponding to his/her demand and the corresponding search result quickly according to the at least one first level of demand dimensions, and a defect of the related art that the user does not know how to construct the search query to obtain the search result meeting the demand of the user may be overcome, such that even if the user does not know how to construct the search query, the search result meeting the demand of the user can be gradually defined according to a plurality of levels of demand dimensions; on the other hand, the user can obtain the corresponding search results by clicking on different demand dimensions in the search result page, that is, the search results can be obtained automatically by an intelligent interaction without performing a search again, and a search cost of the user can be reduced. In addition, the demand dimension may be multi-azimuth correlation information associated with a semantic meaning of the search query closely and meeting the demand of the user and is multi-faceted, for example, the plurality of level demand dimensions can represent lateral correlation information of the search query by a plurality of first level demand dimensions, also can represent longitudinal correlation information of the search query by a plurality of lower level demand dimensions, such that the information (may comprise a solution, a value information and an action button) can be provided to the user in many aspects, thus the user can obtain the search result meeting the demand of the user.

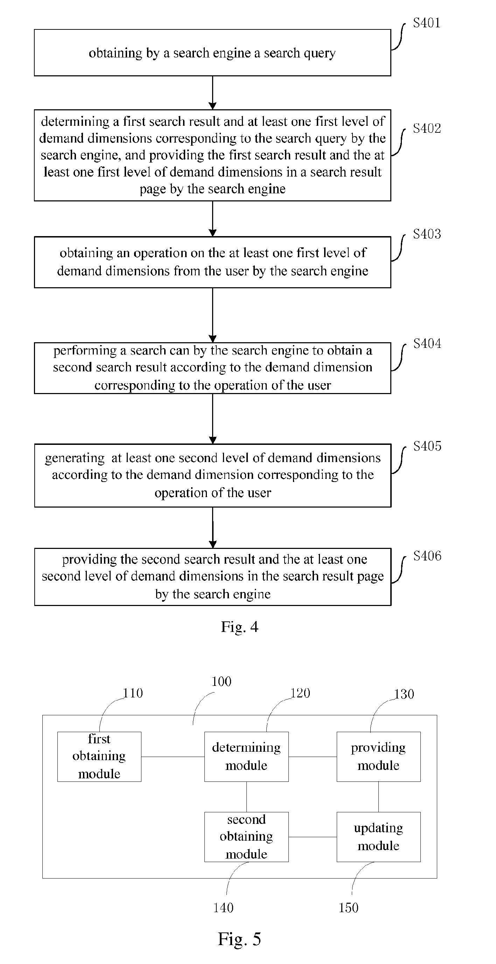

Fig. 4 is a flow chart of a searching method according to another embodiment of the present disclosure.

As shown in Fig. 4, the searching method includes the following steps.

In step S401, a search query is obtained by a search engine.

Specifically, in some embodiments, the user can input the search query in an input box provided by the search engine to enable the search engine to obtain the search query, also the user can input the search query in many kinds input boxes for quick searching to enable the search engine to obtain the search query, and this is not limited in embodiments of the present method.

In step S402, the first search result and the at least one first level of demand dimensions corresponding to the search query are determined by the search engine according to the search query, and the first search result and the at least one first level of demand dimensions are provided in a search result page by the search engine.

Specifically, determining by the search engine the first search result can refer to the related art, which is not limited in embodiments of the present disclosure. The demand dimensions corresponding to the search query are multi-azimuth information obtained by mining a knowledge base according to a demand intensity and associated with a semantic meaning of the search query, and may represent correlation information corresponding to different requirements for the search query. The demand dimensions may represent lateral correlation information associated with the semantic meaning of the search query, also may represent longitudinal correlation information associated with the semantic meaning of the search query.

In some embodiments, the search engine includes a plurality of levels of demand dimensions, in which each first level of demand dimensions includes a plurality of first level demand dimensions, and each first level demand dimension corresponds to at least one lower level demand dimension. The plurality of first level demand dimensions can represent the lateral correlation information, and the plurality of levels of demand dimensions can represent the longitudinal correlation, such that the various demands of the user can be covered fully in many aspects, and thus the user can obtain the search result meeting the demand of the user.

For example, the first level of demand dimensions corresponding to the search query "huskies" may be "purchase strategy", "adorable Husky", "methods for feeding", "anecdotes". Each first level of demand dimension may correspond to at least one second level demand dimension, such as the first level demand dimension "purchase strategy" may correspond to the second level demand dimensions such as "How much is a husky", "Is it easy to keep it ? ", "how to distinguish a purebred dog" and "more purchase strategies".

Fig. 3(a) is a schematic diagram of a search result page according to an embodiment of the present disclosure, as shown in Fig. 3(a), with respect to the search query "huskies" input by the user, the search result page may provide a plurality of demand dimensions at a same level (i.e. the first level demand dimensions) such as "purchase strategy", "adorable Husky", "methods for feeding" and "anecdotes" in region 1; the plurality of lower level demand dimensions(i.e. the second level demand dimensions) corresponding to each first level demand dimension are provided in the region where the each first level demand dimension is located, for example, the demand dimensions such as "How much is a husky", "Is it easy to keep it ? ", "how to distinguish a purebred dog" and "more purchase strategies" can be provided with respect to "purchase strategy". According to a preset strategy, the search results corresponding to one demand dimension thereof can be displayed in region 2, and the preset strategy is not limited in the present disclosure. For example, the search results corresponding to the demand dimension "How much is a husky" may be displayed in Fig. 3(a).

In some embodiments, the user can click on button 3 in region 1 to view more demand dimensions.

In step S403, the operation on the at least one first level of demand dimensions from the user is obtained by the search engine.

For example, after at least one first level of demand dimensions is provided by the search engine, the user can click on the corresponding demand dimension, and the search engine can obtain the operation on the corresponding demand dimension from the user.

In step S404, a search can be performed by the search engine to obtain a second search result according to the demand dimension corresponding to the operation of the user.

For example, as shown in Fig. 3(a), when the user clicks on the demand dimension "purchase strategy", the search engine can obtain the second search result according to the demand dimension "purchase strategy".

In step S405, the at least one second level of demand dimensions is generated according to the demand dimension corresponding to the operation of the user.

For example, as shown in Fig. 3(a), when the user clicks on the demand dimension "purchase strategy", the second level demand dimensions may be generated by the search engine, such as "How much is a husky", "Is it easy to keep it ? ", "how to distinguish a purebred dog" and "more purchase strategies".

It should be understood, S404 and S405 are executed regardless of the order.

In step S406, the second search result and the at least one second level of demand dimensions are provided in the search result page by the search engine.

For example, the second search result and the at least one second level of demand dimensions provided in the search result page may be as shown in Fig. 3(b).

With the searching method according to an embodiment of the present disclosure, the second search result and the at least one second level of demand dimensions may be provided in the search result page according to the demand dimension corresponding to the operation of the user, such that the second search result and the at least one second level of demand dimensions may be comply with the demand and intention of the user and the demand of the user may be located directly, thus reducing the search cost of the user caused by inputting the search query again.

In some embodiments, the demand dimension can be obtained by a variety of ways, for example, the demand dimension can be obtained by analyzing a search log of the user. In some embodiments, the search engine determines at least one first level of demand dimensions corresponding to the search query by performing a semantic analysis on the search query, in which the semantic analysis can be understood with reference to the related art, in this, which is not described herein.

In some embodiments, the searching method further includes the step (not shown in the drawings) of sequencing the plurality of first level demand dimensions in the at least one first level of demand dimensions according to a query frequency and/or a user search record. Specifically, sequencing the plurality of first level demand dimensions can refer to the related art, which is not described herein. The hot demand dimension can be at the top part of a list of the first level demand dimensions by sequencing the plurality of first level demand dimensions.

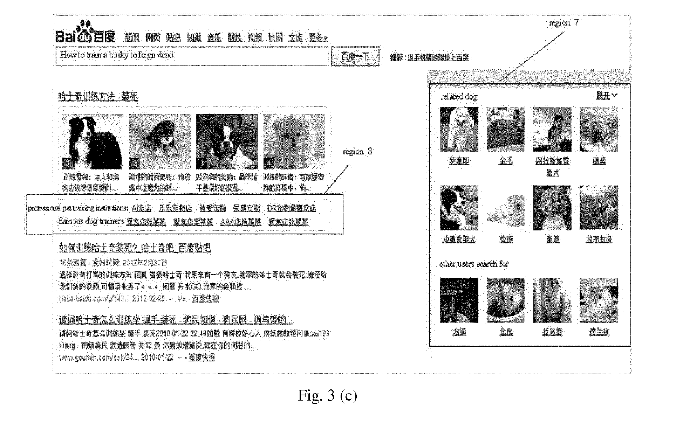

In some embodiments, the searching method further includes the step (not shown in the drawings) of providing a recommendation in the search result page according to the demand dimension corresponding to the operation of the user. Specifically, the recommendation may be an entity associated with the search query, such that the recommendation can help the user to understand entities associated with the search query in all aspects. The recommendation may be a potential succeeding demand or a related appeal. Also, the recommendation can provide more related entities for the user in addition to provide the demand dimensions for helping the user to clarify his search intention. In this way, the user does not feel disappointed, and the recommendation can be provided in the search result page according to the demand dimension corresponding to the operation of the user. For example, Fig. 3(c) is a schematic diagram of a search result page according to yet another embodiment of the present disclosure, as shown in Fig. 3(c), when the user searches for the search query "How to train a husky to feign dead", the search engine can provide the training methods for feigning dead in the search result page, and after the user obtains the training methods for feigning dead, related entities such as "related dog" and "other users search for" can be provided to the user in region 7, and the user may have a potential demand or a related appeal. If the user learns that it is difficult to train the husky to feign death after viewing the training methods for feigning dead, the user may want to find a professional pet training institution to help himself/herself to train the husky, or even may hope to find some famous dog trainers to train the husky, thus the professional pet training institution and famous dog trainers may be recommended by the search engine in region 8 in Fig. 3(c).

In order to achieve the above-described embodiments, a search engine can be provided according to embodiments of the present disclosure.

The search engine, includes: a first obtaining module, configured to obtain a search query; a determining module, configured to determine a first search result and at least one first level of demand dimensions corresponding to the search query according to the search query; a providing module, configured to provide the first search result and the at least one first level of demand dimensions in a search result page; a second obtaining module, configured to obtain an operation on the at least one first level of demand dimensions from a user; an updating module, configured to update the first search result and the at least one first level of demand dimensions in the search result page according to a demand dimension corresponding to the operation of the user.

Fig. 5 is a block diagram of a search engine according to an embodiment of the present disclosure.

As shown in Fig. 5, the search engine includes a first obtaining module 110, a determining module 120, a providing module 130, a second obtaining module 140 and an updating module 150.

Specifically, the first obtaining module 110 is configured to obtain a search query. More specifically, in some embodiments, the user can input the search query in an input box provided by the search engine to enable the first obtaining module 110 to obtain the search query, also the user can input the search query in many kinds of input boxes for quick searching to enable the first obtaining module 110 to obtain the search query, and this is not limited in embodiments of the present method.

The determining module 120 is configured to determine a first search result and at least one first level of demand dimensions corresponding to the search query according to the search query. More specifically, determining by the determining module 120 the first search result can refer to the related art, which is not limited in embodiments of the present disclosure. The demand dimensions corresponding to the search query are multi-azimuth information obtained by mining a knowledge base according to a demand intensity and associated with a semantic meaning of the search query and may represent correlation information corresponding to the different requirements for the search query. The demand dimensions may represent lateral correlation information associated with the semantic meaning of the search query, also may represent longitudinal correlation information associated with the semantic meaning of the search query.

In some embodiments, the search engine includes a plurality of levels of demand dimensions, in which each first level of demand dimensions includes a plurality of first level demand dimensions, and each first level demand dimension corresponds to at least one lower level demand dimension. The plurality of first level demand dimensions can represent the lateral correlation information, and the plurality of levels of demand dimensions can represent the longitudinal correlation information, such that the various demands of the user can be covered fully in many aspects, and thus the user can obtain the search result meeting the demand of the user.

For example, the first level of demand dimensions corresponding to the search query "huskies" may be "purchase strategy", "adorable Husky", "methods for feeding" and "anecdotes". Each first level demand dimension may correspond to at least one second level demand dimension, such as the first level demand dimension "purchase strategy" may correspond to the second level demand dimensions such as "How much is a husky ", "Is it easy to keep it ? ", "how to distinguish a purebred dog" and "more purchase strategies".

The providing module 130 is configured to provide the first search result and the at least one first level of demand dimensions in the search result page.

Fig. 3(a) is a schematic diagram of a search result page according to an embodiment of the present disclosure, as shown in Fig. 3(a), with respect to the search query "huskies" input by the user, the search result page may provide a plurality of level demand dimensions at a same level (i.e. the first level demand dimensions) (such as "purchase strategy", "adorable Husky", "methods for feeding" and "anecdotes") in region 1; the plurality of lower level demand dimensions(i.e. the second level demand dimensions) corresponding to each first level demand dimension are provided in the region where the each first level demand dimension is located, for example, the demand dimensions (such as "How much is a husky", "Is it easy to keep it ? ", "how to distinguish a purebred dog" and "more purchase strategies") can be provided with respect to "purchase strategy". According to a preset strategy, the search results corresponding to one demand dimension thereof can be displayed in region 2, and the preset strategy is not limited in the present disclosure. For example, the search results corresponding to the demand dimension "How much is a husky" may be displayed in Fig. 3(a).

In some embodiments, the user can click on button 3 in region 1 to view more demand dimensions.

The second obtaining module 140 is configured to obtain an operation on the at least one first level of demand dimensions from the user.

The updating module 150 is configured to update the first search result and the at least one first level of demand dimensions in the search result page according to a demand dimension corresponding to the operation of the user.

More specifically, after the search engine provides the first search result and the at least one first level of demand dimensions, the user can perform an appropriate operation according to his/her demand. The second obtaining module 140 may determine the first search result and the at least one first level of demand dimensions according to the operation of the user, and the updating module 150 updates the search result page accordingly.

Fig. 3(b) is a schematic diagram of a search result page according to another embodiment of the present disclosure, after the user click on the demand dimension "purchase strategy", as shown in Fig. 3(b), the updated search result page provides the lower level demand dimensions corresponding to the demand dimension "purchase strategy" (such as "How much is a husky", "Is it easy to keep it? ", "Does a husky lose hair badly? ") in region 4" and provides the search result corresponding to the demand dimension "purchase strategy" in region 5. The user can click on button 6 on the right side of region 4 to view more lower level demand dimensions corresponding to the demand dimension "purchase strategy".

In addition, if the user clicks on the demand dimension "purchase strategy", the search query may be automatically transformed to "how to get a husky" without inputting the search query again, thus the operations of the user can be reduced.

In some embodiments, some higher levels of demand dimensions corresponding to the current demand dimension can be provided in the search result page by providing module 130, for example, as shown in part a of region 4 in Fig. 3(b), the user may click on the corresponding demand dimension to update the search result in the search result page.

With the search engine according to an embodiment of the present disclosure, by determining by the search engine the first search result and the at least one first level of demand dimensions corresponding to the search query according to the search query, on the one hand, he user can locate the search query corresponding to his/her demand and the corresponding search result quickly according to the at least one first level of demand dimensions, and a defect of the related art that the user does not know how to construct the search query to obtain the search result meeting the demand of the user may be overcome, such that even if the user does not know how to construct the search query, the search result meeting the demand of the user can be gradually defined according to a plurality of levels of demand dimensions; on the other hand, the user can obtain the corresponding search results by clicking on different demand dimensions in the search result page, that is, the search results can be obtained automatically by an intelligent interaction without performing a search again, and a search cost of the user can be reduced. In addition, the demand dimension may be multi-azimuth correlation information associated with a semantic meaning of the search query closely and meeting the demand of the user and is multi-faceted, for example, the plurality of level demand dimensions can represent lateral correlation information of the search query by a plurality of first level demand dimensions, also can represent longitudinal correlation information of the search query by a plurality of lower level demand dimensions, such that the information (may comprise a solution, a value information and an action button) can be provided to the user in many aspects, thus the user can obtain the search result meeting the demand of the user.

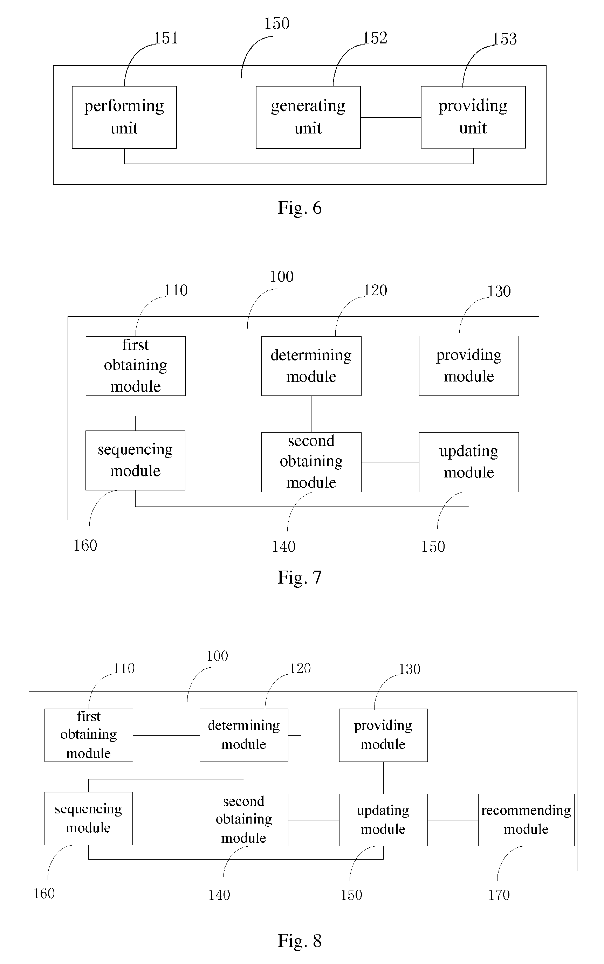

As shown in Fig. 6, in one embodiment of the preset disclosure, the updating module 150 includes a performing unit 151, a generating unit 152 and a providing unit 153.

Specifically, the performing unit 151 is configured to perform a search to obtain a second search result according to the demand dimension corresponding to the operation of the user. For example, as shown in Fig. 3(a), when the user clicks on the demand dimension "purchase strategy", the search engine can obtain the second search result according to the demand dimension "purchase strategy". The generating unit 152 is configured to generate at least one second level of demand dimensions according to the demand dimension corresponding to the operation of the user. For example, as shown in Fig. 3(a), when the user clicks on the demand dimension "purchase strategy", the second level demand dimensions may be generated by the search engine, such as "How much is a husky", "Is it easy to keep it ? ", "how to distinguish a purebred dog" and "more purchase strategies". The providing unit 153 is configured to provide the second search result and the at least one second level of demand dimensions in the search result page. For example, the second search result and the at least one second level of demand dimensions provided in the search result page may be as shown in Fig. 3(b).

Thus, the search engine according to an embodiment of the present disclosure may provide the second search result and the at least one second level of demand dimensions in the search result page according to the demand dimension corresponding to the operation of the user, such that the second search result and the at least one second level of demand dimensions may be comply with the demand and intention of the user and the demand of the user may be located directly, thus reducing the search cost of the user caused by inputting the search query again.

In some embodiments, the demand dimension can be obtained by a variety of ways, for example, the demand dimension can be obtained by analyzing a search log of the user. In some embodiments, the search engine determines at least one first level of demand dimensions corresponding to the search query by performing a semantic analysis on the search query, in which the semantic analysis can be understood with reference to the related art, in this, which is not described herein.

As shown in Fig. 7, the search engine 100 includes a first obtaining module 110, a determining module 120, a providing module 130, a second obtaining module 140, a updating module 150 and a sequencing module 160.

Specifically, the sequencing module 160 is configured to sequence the plurality of first level demand dimensions in the at least one first level of demand dimensions according to a query frequency and/or a user search record. More specifically, sequencing the plurality of first level demand dimensions can refer to the related art, which is not described herein. The hot demand dimension can be at the top part of a list of the first level demand dimensions by sequencing the plurality of first level demand dimensions.

Fig. 8 is a block diagram of a search engine according to another embodiment of the present disclosure. As shown in Fig. 8, the search engine 100 includes a first obtaining module 110, a determining module 120, a providing module 130, a second obtaining module 140, a updating module 150, a sequencing module 160 and a recommending module 170.

Specifically, the recommending module 170 is configured to provide a recommendation in the search result page according to the demand dimension corresponding to the operation of the user. More specifically, the recommendation may be an entity associated with the search query, such that the recommendation can help the user to understand entities associated with the search query in all aspects. The recommendation may be a potential succeeding demand or a related appeal. Also, the recommendation can provide more related entities for the user in addition to provide the demand dimensions for helping the user to clarify his search intention. In this way, the user does not feel disappointed, and the recommendation can be provided in the search result page according to the demand dimension corresponding to the operation of the user. For example, Fig. 3(c) is a schematic diagram of a search result page according to yet another embodiment of the present disclosure, as shown in Fig. 3(c), when the user searches for the search query "How to train a husky to feign dead", the search engine can provide the training methods for feigning dead in the search result page, and after the user obtains the training methods for feigning dead, related entities such as "related dog" and "other users search for" can be provided to the user in region 7, and the user may have a potential demand or a related appeal. If the user learns that it is difficult to train the husky to feign death after viewing the training methods for feigning dead, the user may want to find a professional pet training institution to help himself/herself to train the husky, or even may hope to find some famous dog trainers to train the husky, thus the professional pet training institution and famous dog trainers may be recommended by the search engine in region 8 in Fig. 3(c).

A non-transitory computer-readable storage medium is provided by embodiments of the present disclosure, including one or more programs for executing a searching method provided by embodiments of the present disclosure.

Any process or method described in the flowing diagram or other means may be understood as a module, segment or portion including one or more executable instruction codes of the procedures configured to achieve a certain logic function or process, and the preferred embodiments of the present disclosure include other performances, in which the performance may be achieved in other orders instead of the order shown or discussed, such as in a almost simultaneous way or in an opposite order, which should be appreciated by those having ordinary skills in the art to which embodiments of the present disclosure belong.

The logic and/or procedures indicated in the flowing diagram or described in other means herein, such as a constant sequence table of the executable code for performing a logical function, may be implemented in any computer readable storage medium so as to be adopted by the code execution system, the device or the equipment (such a system based on the computer, a system including a processor or other systems fetching codes from the code execution system, the device and the equipment , and executing the codes) or to be combined with the code execution system, the device or the equipment to be used. With respect to the description of the present invention, "the computer readable storage medium" may include any device including, storing, communicating, propagating or transmitting program so as to be used by the code execution system, the device and the equipment or to be combined with the code execution system, the device or the equipment to be used. The computer readable medium includes specific examples (a non-exhaustive list): the connecting portion (electronic device) having one or more arrangements of wire, the portable computer disc cartridge (a magnetic device), the random access memory (RAM), the read only memory (ROM), the electrically programmable read only memory (EPROMM or the flash memory), the optical fiber device and the compact disk read only memory (CDROM). In addition, the computer readable storage medium even may be papers or other proper medium printed with program, as the papers or the proper medium may be optically scanned, then edited, interpreted or treated in other ways if necessary to obtain the program electronically which may be stored in the computer memory.

It should be understood that, each part of the present invention may be implemented by the hardware, software, firmware or the combination thereof. In the above embodiments of the present invention, the plurality of procedures or methods may be implemented by the software or hardware stored in the computer memory and executed by the proper code execution system. For example, if the plurality of procedures or methods is to be implemented by the hardware, like in another embodiment of the present invention, any one of the following known technologies or the combination thereof may be used, such as discrete logic circuits having logic gates for implementing various logic functions upon an application of one or more data signals, application specific integrated circuits having appropriate logic gates, programmable gate arrays (PGA), field programmable gate arrays (FPGA).

It can be understood by those having the ordinary skills in the related art that all or part of the steps in the method of the above embodiments can be implemented by instructing related hardware via programs, the program may be stored in a computer readable storage medium, and the program includes one step or combinations of the steps of the method when the program is executed.

In addition, each functional unit in the present disclosure may be integrated in one progressing module, or each functional unit exists as an independent unit, or two or more functional units may be integrated in one module. The integrated module can be embodied in hardware, or software. If the integrated module is embodied in software and sold or used as an independent product, it can be stored in the computer readable storage medium.

The computer readable storage medium may be, but is not limited to, read-only memories, magnetic disks, or optical disks.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A searching method, comprising:
obtaining by a search engine (100) a search query;
determining by the search engine (100) a first search result and at least one first level of demand dimensions corresponding to the search query according to the search query, and providing by the search engine (100) the first search result and the at least one first level of demand dimensions in a search result page;
obtaining by the search engine (100) an operation on the at least one first level of demand dimensions from a user, and updating by the search engine (100) the first search result and the at least one first level of demand dimensions in the search result page according to a demand dimension corresponding to the operation of the user.

2. The method according to claim 1, wherein the search engine comprises a plurality of levels of demand dimensions and the search engine determines the at least one first level of demand dimensions corresponding to the search query by performing a semantic analysis on the search query.

3. The method according to claim 2, wherein each first level of demand dimensions in the at least one first level of demand dimensions comprises a plurality of first level demand dimensions.

4. The method according to claim 3, further comprising:
sequencing the plurality of first level demand dimensions in the at least one first level of demand dimensions according to a query frequency and/or a user search record.

5. The method according to claim 2, wherein the at least one first level of demand dimensions comprises a plurality of first level demand dimensions and at least one lower level demand dimension corresponding to each first level demand dimension.

6. The method according to any of claims 1-5, further comprising:
providing by the search engine a recommendation in the search result page according to the demand dimension corresponding to the operation of the user.

7. The method according to any of claims 1-6, wherein updating by the search engine the first search result and the at least one first level of demand dimensions in the search result page according to the demand dimension corresponding to the operation of the user comprises:
performing a search to obtain a second search result according to the demand dimension corresponding to the operation of the user;
generating at least one second level of demand dimensions according to the demand dimension corresponding to the operation of the user; and
providing the second search result and the at least one second level of demand dimensions in the search result page.

8. A search engine (100), comprising:
a first obtaining module (110), configured to obtain a search query;
a determining module (120), configured to determine a first search result and at least one first level of demand dimensions corresponding to the search query according to the search query;
a providing module (130), configured to provide the first search result and the at least one first level of demand dimensions in a search result page;
a second obtaining module (140), configured to obtain an operation on the at least one first level of demand dimensions from a user;
an updating module (150), configured to update the first search result and the at least one first level of demand dimensions in the search result page according to a demand dimension corresponding to the operation of the user.

9. The search engine according to claim 8, wherein the search engine comprises a plurality of levels of demand dimensions and determines the at least one first level of demand dimensions corresponding to the search query by performing a semantic analysis on the search query.

10. The search engine according to claim 9, wherein each first level of demand dimensions in the at least one first level of demand dimensions comprises a plurality of first level demand dimensions.

11. The search engine according to claim 10, further comprising:
a sequencing module, configured to sequence the plurality of first level demand dimensions in the at least one first level of demand dimensions according to a query frequency and/or a user search record.

12. The search engine according to claim 9, wherein the at least one first level of demand dimensions comprises a plurality of first level demand dimensions and at least one lower level demand dimension corresponding to each first level demand dimension.

13. The search engine according to any of claims 8-12, further comprising:
a recommending module, configured to provide a recommendation in the search result page according to the demand dimension corresponding to the operation of the user.

14. The search engine according to any of claims 8-13, wherein the updating module comprises:
a performing unit, configured to perform a search to obtain a second search result according to the demand dimension corresponding to the operation of the user;
a generating unit, configured to generate at least one second level of demand dimensions according to the demand dimension corresponding to the operation of the user;
a providing unit, configured to provide the second search result and the at least one second level of demand dimensions in the search result page.

15. A non-transitory computer-readable storage medium, comprising one or more programs for executing a searching method according to any one of claims 1-7.
